# EUROPEAN PATENT APPLICATION

(11) **EP 1 635 069 A1**
(43) Date of publication of application: **15.03.2006**
(21) Application number: 05018574.3
(22) Date of filing: 26.08.2005
(51) Int. Cl.: F04D 29/58, F04D 13/06

(54) **Pump assembly**

(30) Priority: 14.09.2004 GB 0420415
(71) Applicant: Dana Automotive Limited, Rugby, Warwickshire, CV23 0WE (GB)
(72) Inventor: Sadler, Christopher, Tamworth Staffordshire, B77 1BG (GB); Brown, David Edward, St Neots Cambs, PE19 5EG (GB); Johnson, Raymond Martin, Erdington Birmingham, B24 0DJ (GB)
(74) Representative: Lucking, David John

(57) **Abstract**

A pump assembly (10) including an electric motor (12) having a stator (28) and a rotor (26), and an electrical or electronic motor control component (44) having a major surface and at least one minor surface, the major surface having a larger surface area than the minor surface or surfaces, wherein the electrical or electronic motor control component (44) is mounted such that the major surface of the electrical or electronic motor control component (44) extends generally parallel to an axis of rotation of the motor rotor (26).

## Description

### Description of Invention

The present invention relates to a pump assembly, particularly, but not exclusively, to a water pump and brushless DC motor assembly for use in an automotive vehicle.

When designing a pump assembly for use in an automotive vehicle, for example for pumping coolant such as water around an internal combustion engine, there are various factors to be taken into consideration. Space in the engine compartment of an automotive vehicle is limited, and therefore it is desirable to provide a pump assembly which is as compact as possible. Moreover, where the pump is driven by an electric motor such as a brushless motor, it is necessary to provide an electronic control unit to control operation of the motor. Such an electronic control unit generates heat when in use, and thus it is desirable to provide some means of cooling the control unit. Finally, it is desirable to minimise the cost of manufacturing the pump assembly by producing a pump assembly that has a reduced number of component parts which are quick and easy to assemble.

According to a first aspect of the invention we provide a pump assembly including an electric motor having a stator and a rotor, and an electrical motor control component having a major surface and at least one minor surface, the major surface having a larger surface area than the minor surface or surfaces, wherein the electrical or electronic motor control component is mounted such that the major surface of the electrical or electronic motor control component extends generally parallel to an axis of rotation of the motor rotor.

By virtue of the invention, a smaller surface area of the electrical or electrical or electronic motor control component faces the motor stator, and thus the electrical or electronic motor control component may absorb less of the heat emitted by the motor stator when in use.

Preferable the electrical or electronic motor control component is elongate, a longitudinal axis of the electrical or electronic motor control component extended generally parallel to an axis of rotation of the motor rotor.

Preferably the pump assembly includes a pump chamber in which is mounted a pumping element, movement of the pumping element in the pump chamber causing pumping of fluid in the pump chamber, and a sealing assembly which extends in between the pump chamber and the motor stator to prevent fluid in the pump chamber from contacting the motor stator, the electronic control component which is mounted such that a longitudinal axis of the electrical or electronic motor control component extends generally parallel to an axis of rotation of the motor rotor being mounted on the sealing assembly.

By virtue of mounting one or more electrical or electronic motor control component of the motor controller on the sealing assembly, i.e. within the overall volume occupied by the pump assembly, a compact pump assembly may be produced.

Preferably at least the portion of the sealing assembly on which the electrical or electronic motor control component is mounted is metallic. In this case the portion of the sealing assembly on which the electrical or electronic motor control component is mounted may be made from aluminium. The sealing assembly may thus act as a sink for heat emitted by the electrical or electronic motor control component and hence assist in cooling the motor controller.

The portion of the sealing assembly on which the electrical or electronic motor control component is mounted may be tubular and enclose a generally cylindrical space in which a portion of the motor rotor is located. In this case, preferably the electrical or electronic motor control component is mounted on an exterior surface of the sealing assembly.

Preferably the electrical or electronic motor control component is mounted in an axially extending recess provided in the sealing assembly. By locating the electrical or electronic motor control component in a recess, a greater surface area of the sealing assembly is presented to the electrical or electronic motor control component, and hence absorption of heat emitted from the electrical or electronic motor control component by the sealing assembly may be increased.

In this case, the recess may be a reentrant channel.

More than one electrical or electronic motor control component may be located in a single recess.

The electrical or electronic motor control component may be retained in the recess by means of a spring clip. The use of a spring clip ensures that assembly of the motor is relatively straightforward.

The portion of the sealing assembly on which the electrical or electronic motor control component is mounted is preferably in contact with pumped fluid so that the pumped fluid may cool the sealing assembly and hence also the electrical or electronic motor control component mounted on the sealing assembly.

An embodiment of the invention will now be described, by way of example only, with reference to the accompanying figures, of which:

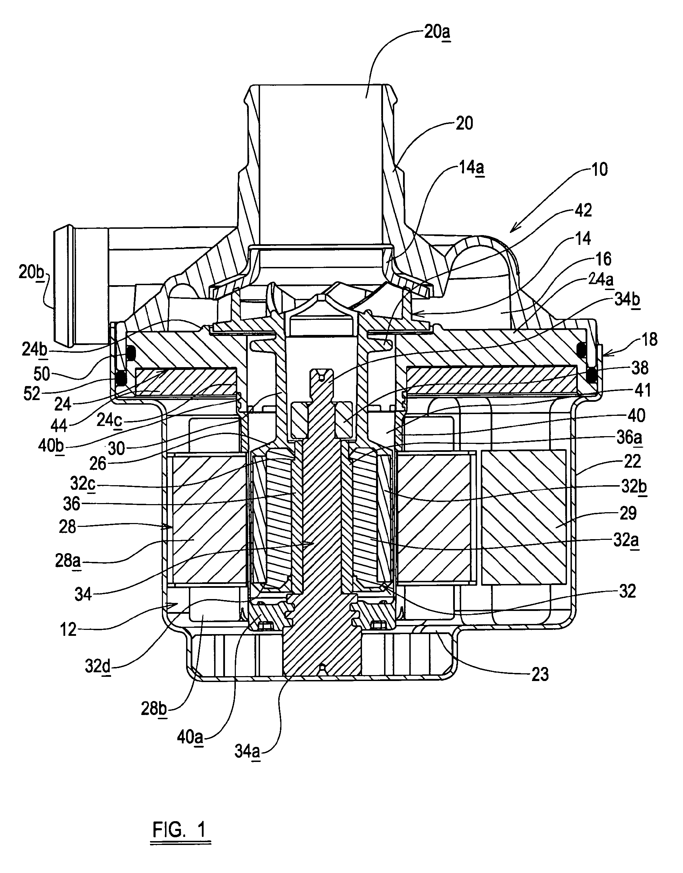

FIGURE 1 is an illustrative cross-sectional view through a pump assembly according to the invention,

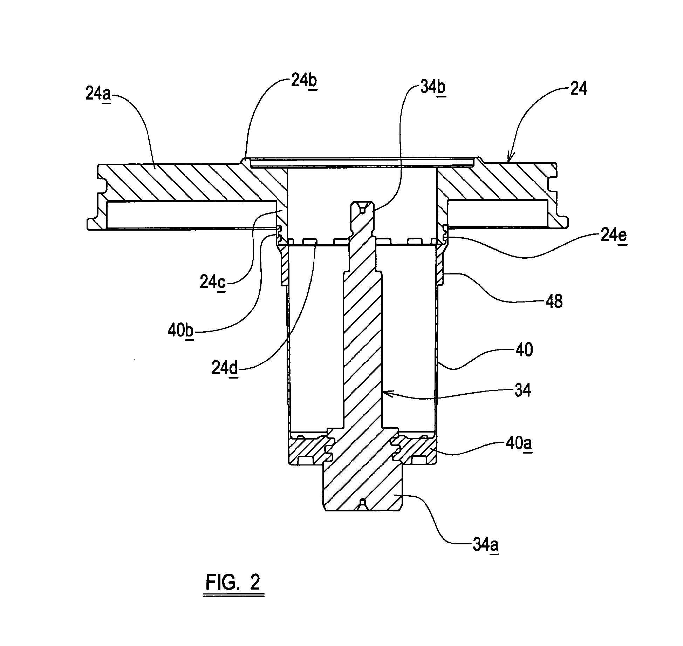

FIGURE 2 is an illustrative cross-sectional view through the sealing assembly, i.e. partition plate, sealing part and static shaft of the pump assembly of Figure 1,

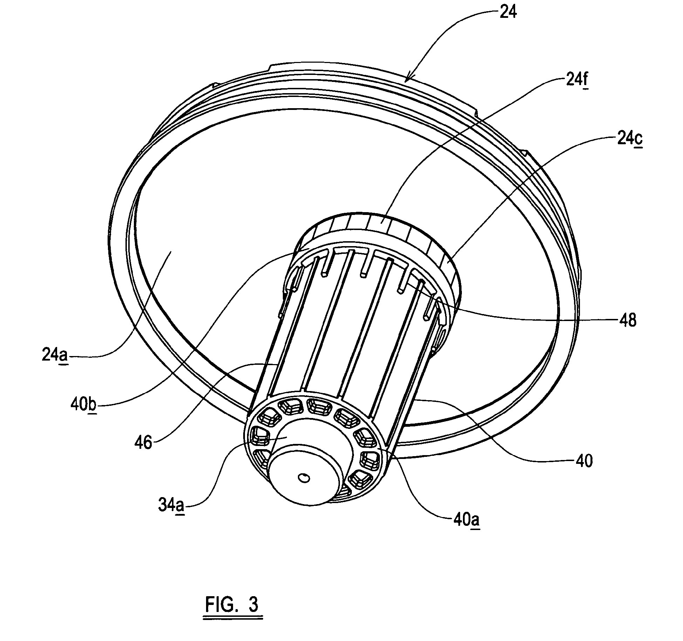

FIGURE 3 is an illustrative perspective view of the sealing assembly of Figure 2,

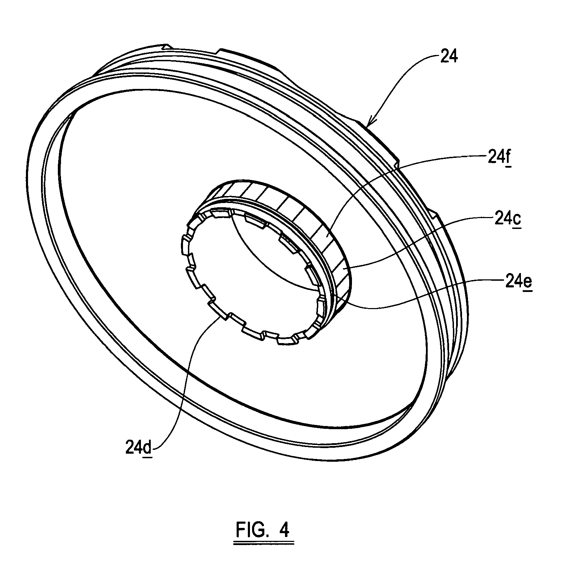

FIGURE 4 is an illustrative perspective view of the partition plate of the pump assembly of Figure 1 from below,

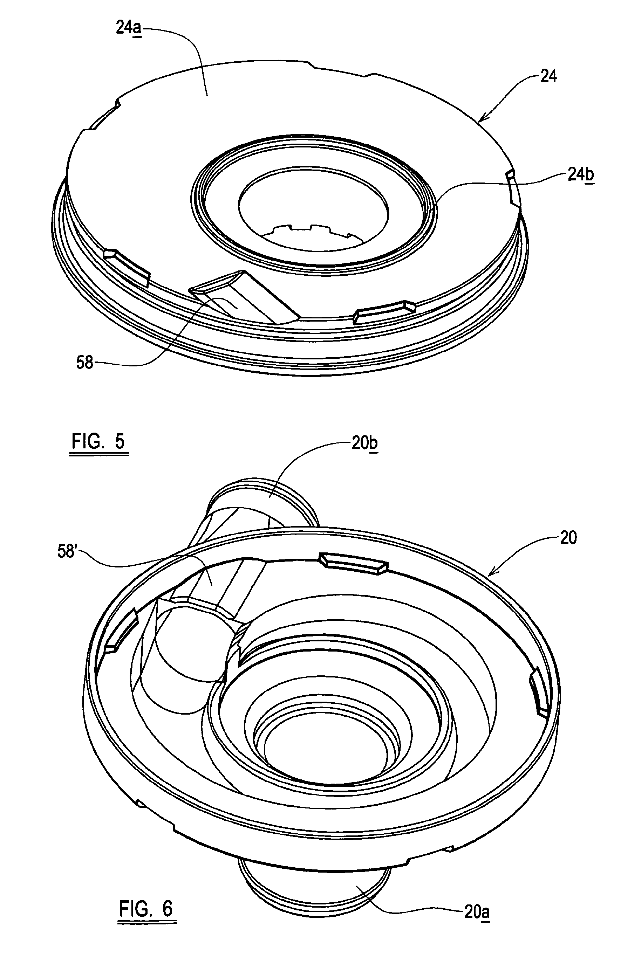

FIGURE 5 is an illustrative perspective view of the partition plate of the pump assembly of Figure 1 from above,
FIGURE 6 is an illustrative perspective view of the volute of the pump assembly of Figure 1 from below,

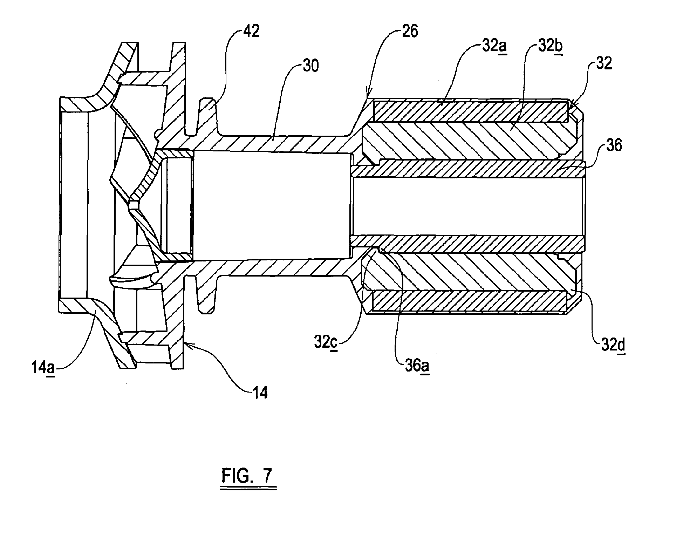

FIGURE 7 is an illustrative longitudinal cross-sectional view through the pumping element and rotor of the pump assembly of Figure 1,

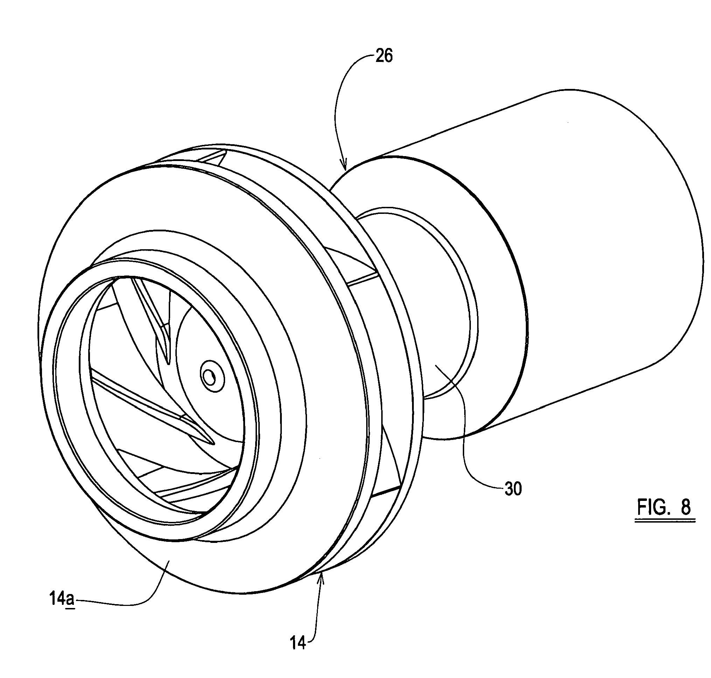

FIGURE 8 is an illustrative perspective view of the pumping element and rotor of Figure 7,

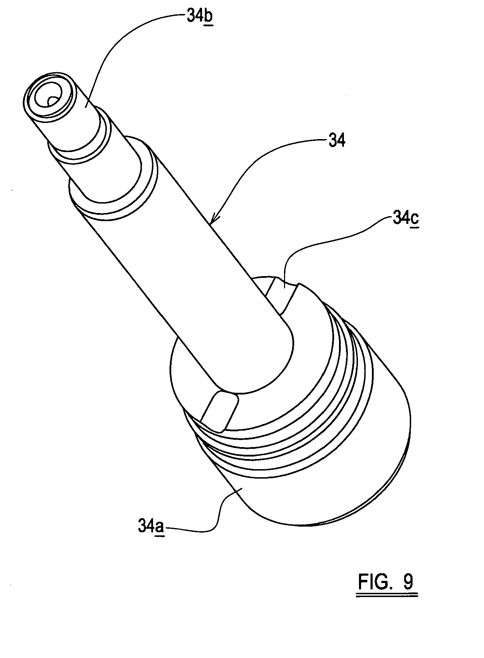

FIGURE 9 is an illustrative perspective view of the shaft of the pump assembly of Figure 1,

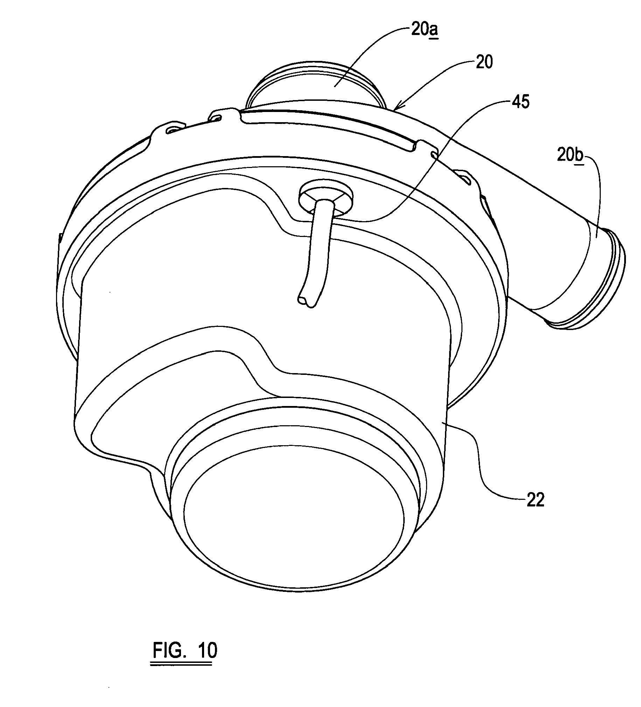

FIGURE 10 is an illustrative perspective view of the pump assembly of Figure 1 viewed from below, and

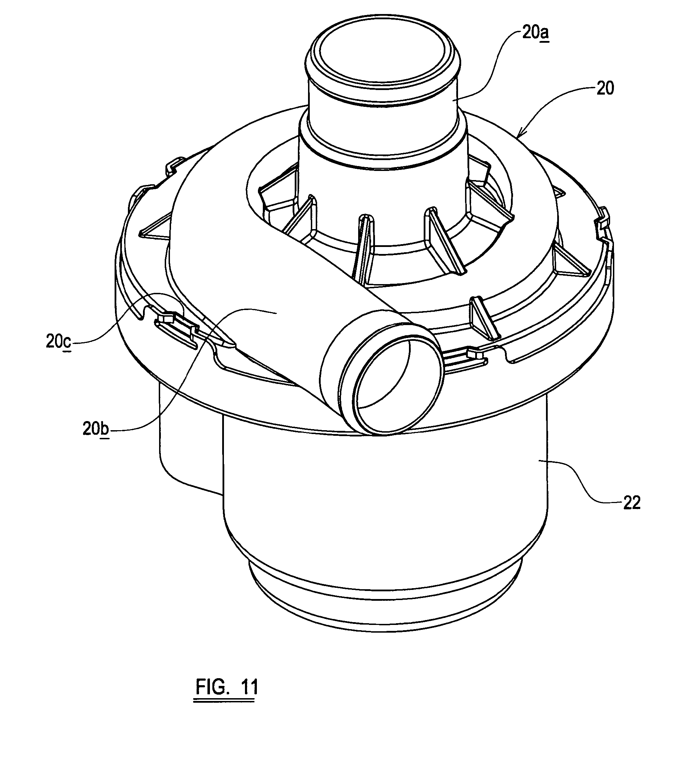

FIGURE 11 is an illustrative perspective view of the pump assembly of Figure 1 viewed from above,

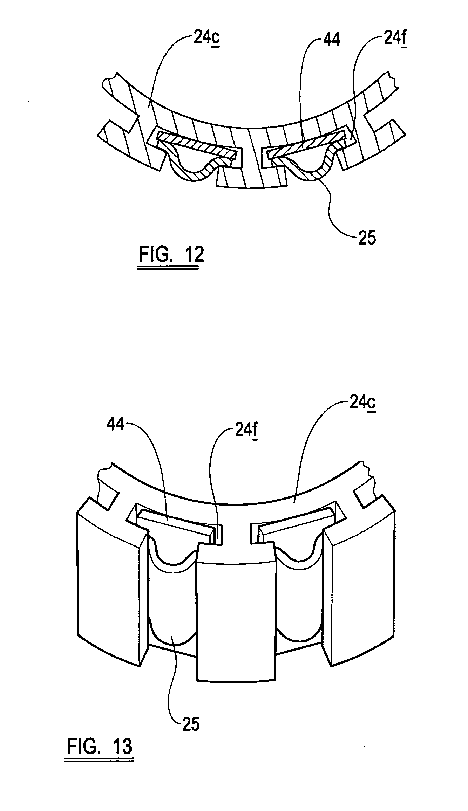

FIGURE 12 is an illustrative transverse cross-section through part of the attachment portion of the partition plate of Figure 4, and
FIGURE 13 is an illustrative perspective view of the part of the attachment portion of Figure 12.

Referring now to the figures, there is shown a pump assembly 10 including a motor 12 and a pumping element 14, in this example a pump impeller, which is mounted for rotation in a pump chamber 16, rotation of the impeller causing pumping of fluid in the pump chamber 16. The impeller 14 is of conventional configuration, and is provided with a top cap 14a which includes a nose portion which has an axially extending wall which encloses a generally cylindrical space. The pump assembly 10 also includes a pump housing 18 which has two parts, namely a volute 20 which encloses the impeller 14 and a motor housing 22 which encloses the motor 12. A generally circular partition plate 24 is provided to separate the volume enclosed by the volute 20 from the volume enclosed by the motor housing 22, the pump chamber thus being enclosed by the partition plate 24 and the volute 20. The volute 20 is of conventional configuration and includes an inlet 20a which extends along the axis of rotation of the impeller 14, and an outlet 20b which extends generally radially of the impeller 14. Both the inlet 20a and outlet 20b have a generally circular cross-section, and to reduce energy losses in fluid passing from the pump chamber 16 into the outlet 20b as a result of the transition from an open chamber into a cylindrical tube, a recess 58 is provided in the surface of the partition plate 24 adjacent the outlet 20b into which a corresponding formation 58' of the pump volute 20, which extends the generally circular cross-section of the outlet 20b into the volute, fits in use.

The motor 12 includes a rotor 26 and stator 28, both of which are mounted in the motor housing 22. The rotor 26 is connected to and coaxial with the impeller 14 such that activation of the motor 12 causes rotation of the impeller 14 in the pump chamber 16, and hence pumping of fluid in the pump chamber 16.

The rotor 26 includes a magnet assembly 32 and generally cylindrical connecting portion 30 which connects the magnet assembly 32 and the impeller 14 and which extends through an aperture in the partition plate 24 to the impeller 14. The magnet assembly 32 includes a plurality of magnets 32a which are arranged around the rotor 26 orientated axially with respect to the rotor 26, and a cylindrical iron yoke 32b around an exterior surface of which the magnets 32a arranged.

The rotor 26 is supported on a static shaft 34 which extends axially along and generally centrally of the rotor 26. A first end 34a of the shaft 34 has a larger diameter than the remainder of the shaft 34, and the end portion is retained in an aperture provided in a stiffener plate 23 which is mounted in the motor housing 22, whilst a second end 34b of the shaft 34 extends into the connecting portion 30 of the rotor 26. The stiffener plate 23 is made from steel, and assists to prevent deformation of the housing 18 under the forces exerted by the pumped fluid on the rotor 26. The shaft 34 is received in an aperture in the stiffener plated 23 in an interference fit, and the stiffener plate 23 is also engaged with the motor housing 22 in an interference fit.

The rotor 26 is provided with a bearing 36 which is mounted on an interior surface of the iron yoke 32b and which engages with the smaller diameter portion of the shaft 34 to support the rotor 26 whilst permitting rotation of the rotor 26 about the shaft 34. As the first end 34a has a larger diameter than the remainder of the shaft 34, and the bearing 36 is engaged with the smaller diameter portion of the shaft 34, the larger diameter portion 34a supports the bearing 36 and ensures that the bearing 36 cannot move axially downwardly relative to the shaft 34. A collar part 38 is mounted around the second end 34b of the shaft 34 and engages with the shaft 34 in an interference fit and with the bearing 36 to restrict axial movement of the rotor 26 with respect to the shaft 34. Mounting the rotor 26 on a static shaft 34 on a single bearing 36 ensures that frictional losses between the rotor 26 and the shaft 34 are minimised and that the rotor 26 has relatively low inertia.

The stator 28 is of conventional construction and includes a plurality of cores made from a magnetizable material around with are wound coils of an electrically conductive wire.

There is a gap between the connecting portion 30 of the rotor and the partition plate 24 so that a portion of the high pressure fluid within the pump chamber 16 is driven into the motor housing 22 around the rotor 26 and thus assists in cooling the motor 12 and bearing 36 and lubricating the bearing 36.

In this example, the diameter of the aperture in the partition plate 24 through which the connecting portion 30 of the rotor 26 extends is significantly larger than the outer diameter of the connecting portion 30. The connecting portion 30 is, however, provided with a radially outwardly extending fin formation 42 which is of substantially the same thickness as the connecting portion 30 and which locally increases the diameter of the connecting portion 30 within the aperture in the partition plate 24 to substantially the same diameter as the nose portion of the impeller top cap 14a. Configuring the fin formation 42 such that the diameter of the fin formation 42 is approximately equal to the outer diameter of the nose portion of the impeller top cap 14a, ensures that the axial forces exerted by the high pressure fluid in the pump chamber 16 are balanced, and therefore there is no net axial thrust exerted on the impeller 14.

High pressure fluid within the pump chamber 16 will flow both towards the inlet 20a through the gap between the volute 20 and the impeller nose portion and into the motor housing 22.

A generally circular ridge formation 24b extends from the partition plate 24 around the impeller 14. Flow of fluid from the pump chamber 16 into the motor housing 22 is thus dictated by the spacing of the impeller 14 from the ridge 24b and the partition plate 24 and the spacing of the fin formation 42 from the partition plate 24, which are typically of the order of 0.5mm.

Two grooves 34c are provided in the radially outwardly extending surface of the shaft 34 between the larger diameter first end 34a and the adjacent smaller diameter portion of the shaft 34, on which the bearing 36 is supported. The two grooves 34c extend radially outwardly of the shaft 34, and rotation of the bearing 36 around the shaft 34 causes fluid in the rotor chamber 41 to be drawn along the grooves 34c radially inwardly of the shaft 34, between the shaft 34 and the bearing 36 to cool and lubricate the bearing, over the second end 34b of the shaft 34 and back into the pump chamber 16 via a central aperture in the impeller 14.

A sealing part 40, which, in this example, comprises a tube wall enclosing a generally cylindrical space hereinafter referred to as the rotor chamber 41, is mounted around the rotor 26, between the rotor 26 and the stator 28 to prevent fluid from the pump chamber 16 from coming into contact with the stator 28. The sealing part 40 is provided at a first end with a radially inwardly extending closure formation 40a which engages with the shaft 34 between the bearing 36 and the first end 34a of the shaft 34. An opposite end 40b of the sealing part 40 engages with a generally tubular attachment portion 24c of the partition plate 24. The attachment portion 24c extends from the edge of the aperture in the partition plate 24 towards the magnet assembly 32 and enclosing a generally cylindrical space.

The motor 12 is a brushless D.C. motor, and operation of the motor 12 is controlled by an electronic control unit (ECU) 44. Power is supplied to the ECU 44 via electrical connectors 45 which are mounted on the exterior of the motor housing 22, and in this example, an electrical filter 29 for filtering the electrical current to the ECU 44 is mounted in the motor housing 22 adjacent the stator 28. As the stator 28 is of a smaller diameter than the diameter of the partition plate 24, the motor housing 22 includes a larger diameter portion which is mounted around the partition plate 24, and a smaller diameter portion which encloses the stator 28 and electrical filter 29. The electrical connectors 45 may thus be mounted on the portion of the motor housing 22 which extends generally parallel to the partition plate 24 between the larger diameter portion and the smaller diameter portion, in order to maintain a compact pump assembly 10 configuration.

The ECU 44 is mounted on the partition plate 24 on the motor housing 22 side of the plate 24 around the aperture through which the rotor 26 extends. Thus, the electrical or electronic motor control components that comprise the ECU 44 are arranged in a generally annular array around the rotor 26. The partition plate 24 is made from cast aluminium, and acts as a heat sink for heat generated by the ECU 44, and is cooled by fluid within the pump chamber 16. Moreover, mounting the ECU 44 within the pump housing 18 on the partition plate 24 may assist in reducing the overall volume of the pump assembly 10.

The main heat generating components of the ECU 44 such as transistors are mounted in axially extending recesses 24f provided around the exterior surface of the attachment portion 24c of the partition plate 24 with their major (i.e. largest surface area) surfaces extending parallel to the axis of rotation A of the rotor 26. Where these components are elongate, ideally they are arranged with their longitudinal axes extending parallel to the axis of rotation A of the rotor 26.

In this example, the attachment portion 24c is profiled such that each recess 24f is a re-entrant channel in order to restrict radial movement of an electrical or electronic motor control component in a recess 24f. The electrical or electronic motor control components may be retained in the recesses 24f by means of a simple spring clip 25, which engages with the reentrant formations. More than one electrical or electronic motor control component may be located in each recess 24f.

As mentioned above, a portion of the fluid in the pump chamber 16 is diverted into the rotor chamber 41 past the attachment portion 24c. The thickness of the attachment portion 24c is considerably less than that of the remainder of the partition plate 24, so cooling of components mounted on the attachment portion 24c by pumped fluid may be more efficient than cooling of components mounted on the remainder of the partition plate 24.

By virtue of arranging such electrical or electronic motor control components axially relative to the motor 12, a smaller surface area of the component faces the stator 28 than if the component were mounted generally flat on the radially extending face of the partition plate 24. Thus, by virtue of this arrangement, less of the heat radiated by the stator 28 may be absorbed by the component, and therefore this arrangement may assist in maintaining the temperature of the ECU 44 as low as possible.

In this embodiment of the invention, the volute 20 is asymmetric, and the inlet 20a does not extend centrally of the volute 20. As the inlet 20a extends coaxially with the impeller 14 and hence also the motor rotor 26, it will be appreciated that the impeller 14 and rotor 26 also do not extend centrally of the pump housing 18. Similarly, the aperture through the partition plate 24 is not located centrally of the partition plate 24, and there is a larger area 24a of partition plate 24 on one side of the aperture.

By virtue of this asymmetrical arrangement, further heat generating electrical or electronic motor control components of the ECU 44 may be concentrated on the larger area 24a of the partition plate 24. The outlet 20b from the volute 20 is located above this larger area 24a of the partition plate 24, and thus the area of the partition plate 24 supporting these heat generating electrical or electronic motor control components of the ECU is cooled by high pressure fluid at the pump outlet 20b. This arrangement may further assist in cooling the ECU 44.

Cooling of the ECU 44 may be further improved by providing features on the surface of the partition plate 24 adjacent the outlet 20b which induce turbulence in fluid passing to the outlet 20b. Such features could be a plurality of ridges.

The method of manufacturing the pump assembly 10 will now be described.

In this example, the rotor 26 and impeller 14 are integrally constructed as a one-piece rotor assembly by injection moulding of a polymer around the magnet assembly 32 and bearing 36. The bearing 36 is mounted in a mould cavity, one end of the bearing 36 engaged with a tool such that the bearing 36 is supported within the mould cavity.

The magnets 32a are mounted around the yoke 32b and glued in place. The yoke 32b includes a radially outwardly extending shoulder formation 32d on its exterior surface, and when the magnets 32a are located in the desired position relative to the yoke 32b, the magnets 32a engage with the shoulder formation 32d, and thus further movement of the magnets 32a relative to the yoke 32b is restricted and the likelihood of the magnets 32a slipping relative to the yoke 32b during the moulding process is reduced.

The yoke 32b is then placed around the bearing 36. The bearing 36 is also provided with a radially outwardly extending shoulder formation 36a on its exterior surface, and the yoke 32b is provided with a corresponding shoulder formation 32c on its interior surface. The shoulder formations 36a, 32c are located such that they engage when the yoke 32b is in the desired position relative to the bearing 36, the shoulder formations 36a, 32c thus restricting further movement of the yoke 32b relative to the bearing 36, and hence reducing the possibility of the yoke 32b slipping relative to the bearing 36 during the moulding process.

By virtue of the provision of the shoulder formations 36a, 32c, 32d there is no need to provide separate tools to support the magnets 32a and yoke 32b in the mould cavity during the moulding process, and hence manufacture of the rotor 26 is simplified.

Fabricating a one piece rotor 26 and impeller 14 by over moulding material ensures that, providing the bearing 36 is correctly located on the appropriate tool during the moulding process, there will be concentricity of the impeller 14, rotor 26 and bearing 36, and that the magnets 32a and yoke 32b are completely sealed from contact with fluid in the rotor chamber 41, and therefore corrosion of the magnets 32a and yoke 32b is substantially prevented. This also simplifies construction of the rotor 26 as no fasteners are required to retain the magnets 32a, yoke 32b and bearing 36 on the rotor 26.

To enhance the sealing of the magnets 32a and yoke 32b, at each end of the yoke 32b there is a step in the interior surface of the yoke 32b which extends around the entire circumference of the interior surface, such that end portions of the interior surface of the yoke 32b are spaced from the bearing 36. Thus, during moulding of the polymeric portion of the rotor 26, molten polymer is forced into and fills these spaces, and further assists in sealing the magnets 32a and yoke 32b from fluid in the rotor chamber 41.

The partition plate 24 is made by pressure die-casting an appropriate aluminium alloy. As the partition plate 24 is in contact with fluid within the pump chamber 16, if the pump is used to pump a fluid which is corrosive to aluminium, for example if the pump is used in fuel cell applications, then it is necessary to apply a corrosion resistant coating to the surfaces in contact with pumped fluid. Such a corrosion resistant coating may be applied by electroless nickel plating for example. Rather than applying a corrosion resistant coating, it is, of course, possible to make the partition plate 24 from a corrosion resistant material such as stainless steel, but a stainless steel partition plate 24 would not only increase the cost and weight of the pump assembly, but would also not provide such an effective heat sink as an aluminium partition plate 24. The partition plate 24 may alternatively be made from a polymeric material.

The static shaft in this example is machined from stainless steel bar, but may be made from any other appropriate material, such as a ceramic, or polymer.

Whilst the sealing part 40 could be integral with the partition plate 24, in order to provide an effective heat sink, the partition plate 24 is preferably metallic. The sealing part 40 is preferably made from a polymer, however, as such a material would have minimal effect on the magnetic fields between the rotor 26 and the stator 28. Moreover, it is desirable to minimise the gap between the rotor 26 and stator 28, and thus the sealing part 40 should be as thin as possible. In contrast, a thicker partition plate 24 is required to provide structural integrity and to act as an effective heat sink, and moulding a component with such variation in section thickness can be problematic. Thus, in this example, the sealing part 40 is not integrally formed with the partition plate 24, but is, instead, made by injection moulding a polymeric material around the partition plate 24 and the shaft 34 to form a one piece sealing can assembly. The partition plate 24 and shaft 34 are located in mould tools which hold the parts in position in the mould cavity during the injection moulding process, and the sealing part 40 is then overmoulded around the attachment portion 24c of the partition plate 24 and the shaft 34. In this example, the sealing part 40 is made from 0.5mm thick PPS. The sealing part 40 may, however, be made from any other appropriate polymer, e.g. PPA.

Overmoulding the sealing part 40 ensures that a substantially fluid tight seal is provided between the sealing part 40 and the partition plate 24 and shaft 34, and thus leakage of fluid from the rotor chamber 41 into the remainder of the motor housing 22 is substantially prevented.

To enhance the sealing between the sealing part 40 and the shaft 34, the shaft is provided with two circumferential grooves. During injection moulding of the sealing part 40, molten polymer flows into and fills these grooves, and thus, the grooves not only ensure that there is mechanical locking of the shaft 34 relative to the sealing part 40, but that there is a substantially fluid tight seal between these two parts. Whilst in this example the sealing part 40 is overmoulded around the shaft 34, the shaft may, instead be integral with the sealing part 40.

To enhance the sealing between the sealing part 40 and the partition plate 24, the attachment portion 24c provided with is axially extending castellations 24d at the free end thereof, and an exterior surface of the attachment 24c is provided with two circumferential grooves 24e. During overmoulding of the sealing part 40, molten polymer flows into and fills the grooves 24e and the spaces of the castellations 24d, and when the polymer sets, this provides mechanical locking of the sealing part 40 relative to the partition plate 24, and may assist in improving the seal between the partition plate 24 and the sealing part 40. The use of both axial castellations 24d and radial grooves 24e ensures that differential thermal expansion of the polymeric sealing part 40 and metallic partition plate 40 can be accommodated and a good seal provided over a wide range of temperatures and pressures.

The volute 20 is made from injection moulded PPS, and the motor housing 22 is made by deep drawing steel sheet to a thickness of 1.2 mm. Provision of a metallic motor housing 22 ensures that heat from the stator 28 may be lost through the motor housing 22.

The pump assembly 10 is then assembled by first mounting the ECU 44 on the partition plate 24. The main heat generating electrical or electronic motor control components are slid into the recesses 24f around the attachment portion 24c of the partition plate 24, and at least one spring clip 25 inserted into each recess 24f to retain the components in the recesses 24f. The remainder of the partition plate 24 is provided with cast mounting features for attachment of other portions of the ECU 44. Such features may, for example, be axially extending pins which pass through appropriate apertures in the ECU 44 and which are then deformed to retain the ECU 44 on the partition plate 24. The use of integral mounting features simplifies assembly of the pump assembly 10 as separate fasteners are not required.

The stator 28 is then located around the sealing part 40. The exterior surface of the sealing part 40 is provided with a plurality of axially extending locating ridges 46, which are spaced so as to fit into gaps between adjacent cores of the stator 28, and a plurality of axially extending abutment ridges 48 which are located adjacent the partition plate 24 and which engage with the stator 28 to ensure that the stator is correctly aligned, radially and axially, with respect to the sealing part 40. The locating ridges 46 and abutment ridges 48 not only ensure that the stator 28 is correctly aligned, but also provide the sealing part 40 with structural stability without increasing the gap between the rotor 26 and the stator 28.

Whilst in this example, the location ridges 46 and abutment ridges 48 are regularly spaced around the sealing part 40, this need not be the case, and the ridges 46, 48 may be unevenly spaced on one or more of the ridges 46, 48 may be different to the others to ensure that the stator 28 can only be fitted in one particular orientation around the sealing part 40.

Once the stator 28 is in place, electrical connections between the stator 28 and the ECU 44 are completed, and the electrical filter 29 installed adjacent the stator 28. The motor housing 22 is then placed around the stator 28, the electrical connections between the ECU 44 and the external electrical connectors 25 are completed and the motor housing 22 bonded to the stator 28 using thermal adhesive. The motor housing 22 extends around partition plate 24, and a sealing element, in this example an O-ring, is located between the partition plate 24 and the motor housing 22 to substantially prevent ingress of dirt or moisture into the motor housing 22.

The rotor 26 and impeller 14 assembly is then inserted into the rotor chamber 41 and the collar part 38 placed around the static shaft 34 to prevent axial movement of the rotor 26 relative to the shaft.

Finally, an O-ring 50 is located in a groove around the outer circumference of the partition plate 24 and the volute 20 is mounted around the partition plate 24 such that the O-ring 50 provides a substantially fluid tight seal between the partition plate 24 and the volute 20. Attachment formations on the volute 20 engaged are with corresponding attachment formations on the motor housing 22 to retain the volute 20 on the pump assembly 10.

When used in this specification and claims, the terms "comprises" and "comprising" and variations thereof mean that the specified features, steps or integers are included. The terms are not to be interpreted to exclude the presence of other features, steps or components.

## Claims

1. A pump assembly 10 including an electric motor 12 having a stator 28 and a rotor 26, and one electrical or electronic motor control component 44 having a major surface and at least one minor surface, the major surface having a larger surface area than the minor surface or surfaces, wherein the electrical or electronic motor control component 44 is mounted such that the major surface of the electrical or electronic motor control component 44 extends generally parallel to an axis of rotation A of the motor rotor 26.

2. A pump assembly 10 according to claim 1 wherein the electrical or electronic motor control component 44 has a longitudinal axis which extends generally parallel to the axis of rotation A of the motor rotor 26.

3. A pump assembly 10 according to claim 1 or 2 wherein the pump assembly 10 includes a pump chamber 16 in which is mounted a pumping element 14, movement of the pumping element 14 in the pump chamber 16 causing pumping of fluid in the pump chamber 16, and a sealing assembly 24, 40 which extends in between the pump chamber 16 and the motor stator to prevent fluid in the pump chamber 16 from contacting the motor stator 28, the electronic control component 14 being mounted on the sealing assembly 24, 40.

4. A pump assembly 10 according to claim 3 wherein at least the portion of the sealing assembly 24, 40 on which the electrical or electronic motor control component 44 is mounted is metallic.

5. A pump assembly 10 according to claim 4 wherein the portion of the sealing assembly 24, 40 on which the electrical or electronic motor control component 44 is mounted is made from aluminium.

6. A pump assembly 10 according to any one of claims 3 to 5 wherein the portion of the sealing assembly 24, 40 on which the electrical or electronic motor control component 44 is mounted is tubular and encloses a generally cylindrical space in which at least a portion of the motor rotor 26 is located.

7. A pump assembly 10 according to claim 6 wherein the electrical or electronic motor control component 44 is mounted on an exterior surface of the sealing assembly 24, 40.

8. A pump assembly 10 according to any one of claims 3 to 7 wherein the electrical or electronic motor control component 44 is mounted in an axially extending recess 24f provided in the sealing assembly 24, 40.

9. A pump assembly 10 according to claim 8 wherein the recess 24f is a reentrant channel.

10. A pump assembly 10 according to claim 8 or 9 wherein more than one electrical or electronic motor control component 44 is located in a single recess 24f.

11. A pump assembly 10 according to claim 8, 9 or 10 wherein the electrical or electronic motor control component 44 is retained in the recess 24f by means of a spring clip 25.

12. A pump assembly 10 according to any one of claims 3 to 11 wherein the portion of the sealing assembly 24, 40 on which the electrical or electronic motor control component 44 is mounted is in contact with fluid in or from the pump chamber 16.
